# EUROPÄISCHE PATENTANMELDUNG

(11) **EP 0 694 440 A1**
(43) Veröffentlichungstag der Anmeldung: **31.01.1996**
(21) Anmeldenummer: 95110072.6
(22) Anmeldetag: 28.06.1995
(51) Int. Cl.: B60R 9/042

(54) **Dachträger**

(30) Priorität: 25.07.1994 CH 2341/94
(71) Anmelder: Milz Produkte AG, CH-8637 Laupen (CH)
(72) Erfinder: Dubach, Fredi, CH-8344 Bäretswil (CH)
(74) Vertreter: Blum, Rudolf Emil Ernst

(57) **Zusammenfassung**

Der Dachträger umfasst zwei horizontale Dachschienen (1) und zwei schwenkbare Hilfsschienen (3). Zum Beladen des Dachträgers werden die Hilfsschienen (3) so positioniert, dass sie als schräg nach unten verlaufende Verlängerung der Dachschienen (1) wirken und zusammen mit diesen eine starre Gesamtschiene bilden. Entlang der Gesamtschiene können Lastfahrzeuge (4) verschoben werden. Diese Lastfahrzeuge (4) sind so geführt, dass sie bei ihrem Weg entlang der Gesamtschiene nicht verkippt werden.

Der Dachträger zeichnet sich durch eine einfache Konstruktion und grosse Stabilität aus. Auf eine komplizierte Mechanik kann verzichtet werden.

## Beschreibung

Die Erfindung betrifft einen Dachträger gemäss dem Oberbegriff von Anspruch 1.

Dachträger dieser Art dienen dazu, Ladegut, wie z.B. Skis, Fahrräder oder Gepäck, auf dem Dach eines Fahrzeugs zu befestigen. Zum Beladen muss das Ladegut auf die Höhe des Dachs des Fahrzeugs gehoben werden. Da dies insbesondere bei schwerem Ladegut Probleme bereiten kann, sind Beladungshilfen vorgeschlagen worden, die das Anheben des Ladeguts erleichtern. Derartige Konstruktionen sind in DE-A-42 29 762, EP-A-568 855, US 4 826 387 und GB-A-2 073 686 beschrieben. Diesen Lösungen ist gemeinsam, dass sie eine relativ grosse Zahl beweglicher Teile erfordern, was die Konstruktionen aufwendig und fehleranfällig macht.

In AU 28 962/67 und FR 986 618 werden Lösungen beschrieben, die konstruktiv einfacher sind. Sie eignen sich jedoch nur beschränkt für Lasten mit grosser Höhe.

Deshalb stellt sich die Aufgabe, einen Dachträger der eingangs erwähnten Art bereitzustellen, der diese Nachteile mindestens teilweise vermeidet. Trotzdem soll er einfach und robust sein, so dass er eine preiswerte Alternative zu bekannten Lösungen darstellt.

Diese Aufgabe wird durch den Dachträger gemäss Anspruch 1 erfüllt.

Indem die Hilfsschiene mit der Dachschiene zu einer im wesentlichen starren, durchgehenden Gesamtschiene vereint werden kann, auf der zur Aufnahme des Ladeguts ein Schlitten läuft, wird die Konstruktion einfach. Die einzige Bewegung, die zum Beladen durchzuführen ist, ist die Relativbewegung zwischen Schlitten und Schiene. Die Schiene braucht ihre Form beim Beladen nicht zu ändern.

Der Schlitten wird so in der Schiene geführt, dass er, oder zumindest seine Aufnahmevorrichtung, beim Beladen nicht verkippt wird. Dies ist insbesondere bei hohem Ladegut (z.B. Fahrräder), oder bei Ladegut, das nicht gekippt werden soll, von Vorteil.

Jeder Schlitten ist vorzugsweise mit Führungsmitteln versehen, die mindestens entlang einem Teil der Schiene geführt sind. Die Bahnen der Führungsmittel sind vorzugsweise so zu wählen, dass sich die Schlittenlage beim Verfahren entlang der Schiene nicht ändert. Dies geschieht dadurch, dass alle Führungsbahnen identischen, aber parallel zueinander versetzten geometrischen Kurven folgen.

Vorzugsweise sind die Führungsmittel als Rollen oder Gleiter ausgebildet, die an der Ober- bzw. Unterseite der Schienen laufen. Eine so ausgestaltete Vorrichtung ist auch bei Schnee und Eis immer einsatzbereit, da die Ober- und Unterseite in der Regel sauber bleiben bzw. einfach gereinigt werden können.

Die Hilfsschienen können derart an den Dachschienen befestigt werden, dass sie in eine senkrecht zu den Dachschienen stehende Ruhestellung schwenkbar sind. Dies erlaubt es, den Dachträger in eine kompakte Form mit seitlich angelegten Hilfsschienen zu bringen. In Ihrer Ruhestellung werden die Schienen vorzugsweise von einem Verschlussmechanismus gehalten, der gleichzeitig auch die Schlitten arretiert. So kann ausgeschlossen werden, dass ein Anwender nach dem Beladen vergisst, die Schlitten zu sichern.

Weitere Ausführungen, Vorteile und Anwendungen der Erfindung ergeben sich aus der nun folgenden Beschreibung einiger Ausführungen anhand der Figuren. Dabei zeigen:
Figur 1 eine perspektivische Ansicht eines Fahrzeugs mit einem erfindungsgemässen Dachträger in Beladestellung,
Figur 2 den Dachträger von Figur 1 in Transportstellung,
Figur 3 eine Seitenansicht einer Schiene des Dachträgers von Figur 1,
Figur 4 einen Schnitt entlang Linie IV-IV von Figur 3,
Figur 5 eine Aufsicht auf die Schiene von Figur 4
Figur 6 eine Detailansicht des Uebergangsbereichs zwischen Dach- und Hilfsschiene von der Vorderseite aus gesehen,
Figur 7 den Uebergangsbereich von Figur 6 von der Rückseite aus gesehen,
Figur 8 den Uebergangsbereich von Figur 6 nach einer Drehung um die Horizontalachse,
Figur 9 eine alternative Ausführung von Schiene und Schlitten,
Figur 10 eine Seitenansicht einer dritten Ausführung von Schiene und Schlitten und
Figur 11 einen Schnitt entlang Linie XI-XI von Figur 10.

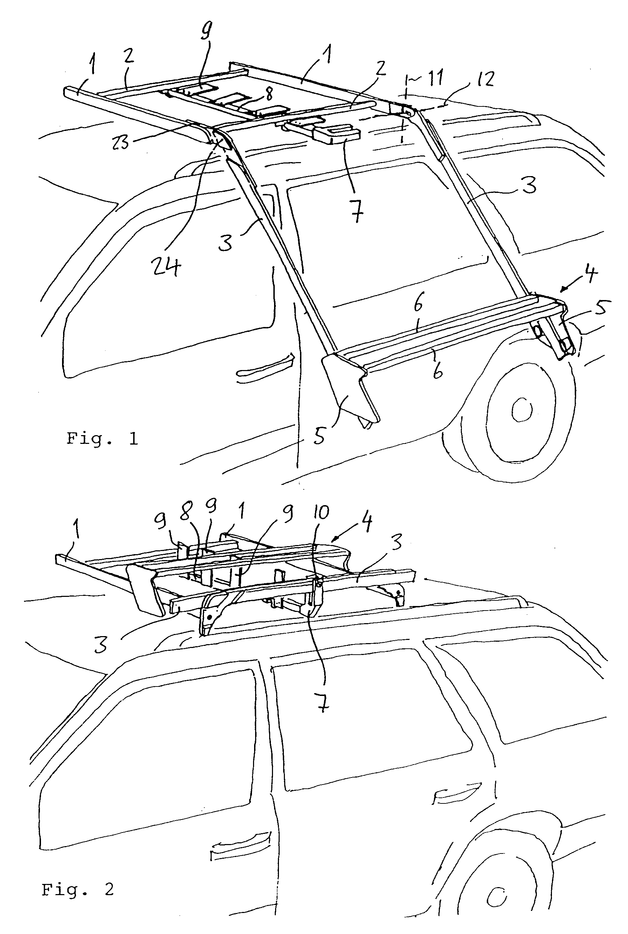

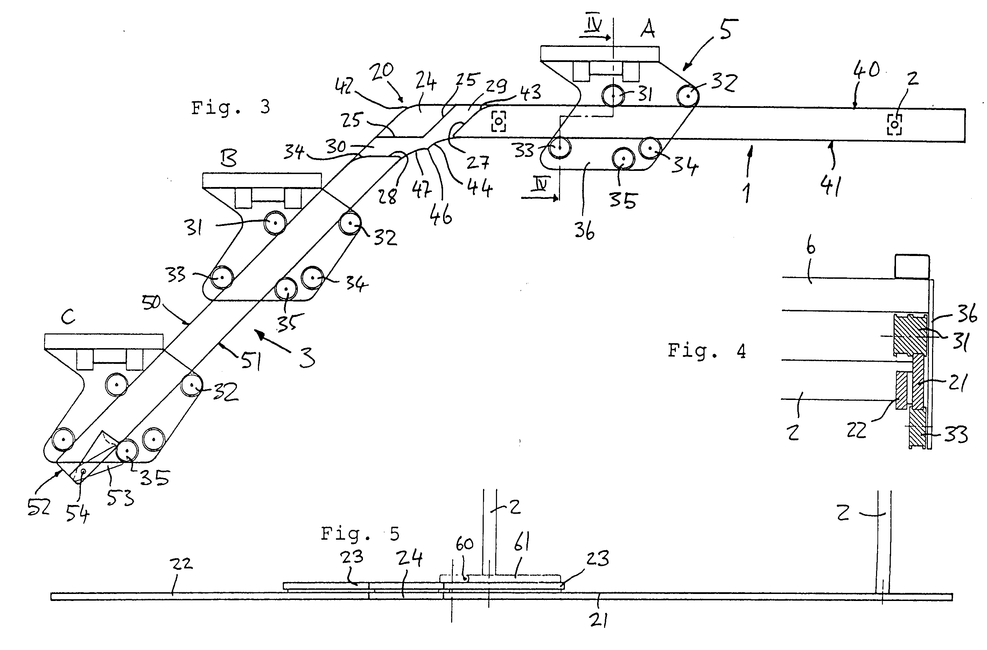

Der prinzipielle Aufbau und die Funktion einer bevorzugten Ausführung des Dachträgers ergeben sich aus den Figuren 1 und 2. Der Dachträger umfasst zwei Dachschienen 1, die hier quer zum Fahrzeug angeordnet sind. Sie verlaufen horizontal und sind mit geeigneten Befestigungsmitteln am Fahrzeug befestigt. Zwischen den Dachschienen 1 verlaufen Querbalken 2, die die beiden Dachschienen zu einer starren Einheit verbinden.

An jeder Dachschiene 1 ist eine Hilfsschiene 3 befestigt. Die Hilfsschienen können zwischen einer Beladestellung (Figur 1) und einer Transportstellung (Figur 2) verschwenkt werden. Hierzu sind je zwei Gelenke vorgesehen, die weiter unten genauer beschrieben werden.

In der Beladestellung nach Figur 1 verlaufen die Hilfsschienen 3 von den Dachschienen 1 ausgehend seitlich des Fahrzeugs schräg nach unten. Jede Dachschiene bildet zusammen mit ihrer Hilfsschiene in dieser Position eine starre Gesamtschiene. Auf dieser Gesamtschiene ist mindestens ein Lastfahrzeug 4 angeordnet. Dieses umfasst zwei Schlitten 5, die auf den Schienen 1 rsp. 3 laufen, sowie Streben 6, die die beiden Schlitten 5 verbinden. Je nach Ladegut ist auf dem Lastfahrzeug 4 ausserdem eine (nicht gezeigte) Befestigungsvorrichtung für das Ladegut angeordnet. Wie weiter unten genauer beschrieben wird, sind die Schlitten 5 so an den Schienen 1 rsp. 3 geführt, dass sie beim Bewegen entlang der Schienen nicht verkippt werden. Somit verbleibt das Ladegut immer in der gleichen Stellung.

Wenn ein Lastfahrzeug 4 fertig beladen rsp. entladen ist, kann es entlang der Hilfsschienen 3 auf die Dachschienen 1 geschoben werden.

Nach erfolgter Beladung rsp. Entladung werden die Hilfsschienen 3 nicht mehr benötigt und können in die in Figur 2 dargestellte Transportstellung verschwenkt werden. In dieser Stellung liegen die Hilfsschienen 3 senkrecht zu den Dachschienen 1 seitlich am Dachträger an. Sie werden mittig von einem U-Bügel 7 gehalten.

Der U-Bügel 7 ist Teil eines Verschlussmechanismus, der eine Längsachse 8 und Arretierorgane 9 umfasst. Er ist um die Längsachse 8 drehbar. Beim Beladen befindet er sich in der in Figur 1 gezeigten Stellung, in welcher die Arretierorgane 9 parallel zum Dach des Fahrzeugs verlaufen. In dieser Stellung behindern sie die Bewegung der Lastfahrzeuge 4 nicht. Ist der Be- rsp. Entladevorgang beendet und befinden sich alle Lastfahrzeuge 4 wieder auf den Dachschienen 1, so wird der Verschlussmechanismus um seine Längsachse 8 gedreht, so dass die Arretierorgane 9 zwischen die Streben 6 der geeignet positionierten Lastfahrzeuge 5 eingreifen und diese arretieren. Dann werden die Hilfsschienen 3 um die gestrichelt gezeichneten Schwenkachsen 11 und 12 nach oben und innen geschwenkt und von oben in den U-Bügel 7 eingeführt. Anschliessend wird der U-Bügel 7 durch ein Schloss 10 verriegelt. Nun befinden sich die Lastfahrzeuge 4 und die Hilfsschienen 3 in der Transportstellung und sind sicher arretiert.

Im folgenden werden nun einige konstruktive Einzelheiten der bevorzugten Ausführung des Dachträgers erläutert.

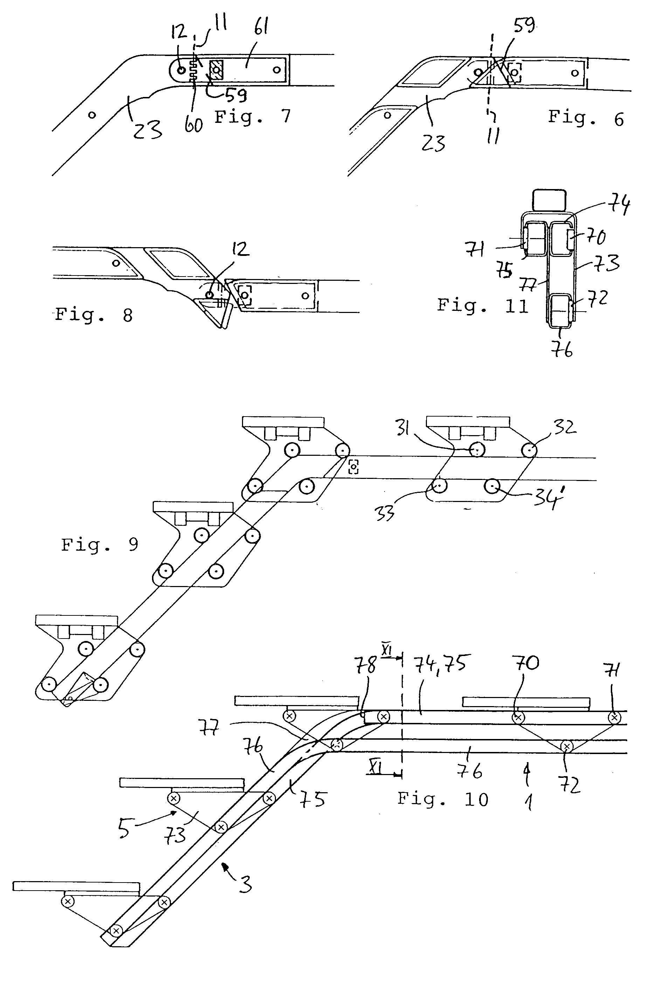

Wie aus den Figuren 3 - 5 sowie aus Figur 1 ersichtlich ist, bildet jede Schiene zwei gerade Abschnitte, die über einen gekrümmten Uebergangsbereich 20 verbunden sind. In den geraden Abschnitten besteht die Schiene aus je einem geraden Metallprofil 21 rsp. 22 (Figur 5) mit rechteckigem Querschnitt. Im Uebergangsbereich sind diese Metallprofile 21, 22 über ein seitlich angeordnetes, gebogenes Uebergangselement 23 verbunden, welches ebenfalls einen rechteckigen Querschnitt aufweist. Am Uebergangselement 23 ist ein Hilfsstück 24 befestigt, dessen Anordnung insbesondere auch aus Figur 1 ersichtlich ist. Das Hilfsstück 24 weist die gleiche Dicke wie die Profile 21 und 22 auf. Seine unteren Kanten 25 verlaufen beabstandet und parallel zu den Endkanten 27 und 28 der Profile 21 rsp. 22, so dass dazwischen Führungskanäle 29 rsp. 30 gebildet werden.

Jeder der Schlitten 5 weist insgesamt fünf Führungsrollen 31 - 35 auf, welche an einer vertikal stehenden Basisplatte 36 befestigt sind. Die Basisplatte 36 befindet sich auf jener Seite der Schiene, auf welcher die Führungskanäle 29 und 30 verlaufen. Die Höhe der Rollen 31, 34 und 35 entspricht etwa der Breite der Schiene im Bereich des Uebergangstücks 23. Die Höhe der Rollen 32 und 33 entspricht lediglich etwa der Breite der Profile 21 und 22. Wie aus Figur 4 ersichtlich ist, sind also die Rollen 31, 34 und 35 etwa doppelt so lang wie die Rollen 32 und 33.

Wenn sich ein Schlitten im Bereich der Dachschiene 1 befindet (Position A in Figur 3), so laufen die Rollen 31 und 32 auf der Oberkante 40 des Profils 21, und die Rollen 33 und 34 auf der Unterkante 41. Wird ein Schlitten aus Position A gegen den gebogenen Bereich 20 geführt, so kommt zuerst die Rolle 33 frei, und tritt dann in den Führungskanal 30 ein. Gleichzeitig läuft die lange Rolle 31, welche auf dem Uebergangsstück 23 geführt wird, bis an die Krümmung im Scheitelpunkt 42. Da parallel dazu verlaufende Krümmungen an den Enden 43 und 45 der Führungskanäle 29, 30 und im Bereich 44 der Unterseite des Uebergangsstücks 23 ausgeformt sind, beginnt sich nun der Schlitten 5 zu senken, ohne dass er gekippt wird. Die Rolle 32 tritt in den Führungskanal 29 ein und die Rolle 33 verlässt den Führungskanal 30. Die Rolle 34 verliert in Punkt 46 den Kontakt mit dem Uebergangsstück 23 und wird in ihrer Funktion von der Rolle 35 abgelöst, die der Krümmung 47 des Uebergangsstücks folgt. So erreicht der Schlitten die Position B auf der Hilfsschiene 3, wo nun die Rollen 31 und 33 auf der Aussenkante 50 und die Rollen 32 und 35 auf der Innenkante 51 laufen.

Wird der Schlitten weiter gegen das Ende 52 der Hilfsschiene 3 verfahren, so fährt die Rolle 35 gegen einen Hebel 53 (Position C). Der Hebel 53 ist um eine Achse 54 schwenkbar gelagert und überragt in seiner Ruhestellung die Unterkante 51. Soll der Schlitten aus der Schiene entnommen werden, so kann der Hebel 53 nach oben gedrückt und der Schlitten 5 ausgefahren werden. Beim Einfahren in die Schiene wird der Hebel 53 von den Rollen 32 rsp. 35 automatisch nach oben gedrängt.

Wie aus der Figur 3 ersichtlich ist, sind die Schlitten 5 so geformt, dass sie auf der Dachschiene möglichst eng aufeinander folgen können. Somit findet leicht vier oder mehr Schlitten auf dem Wagendach Platz.

Wie bereits erwähnt, können die Hilfsschienen 3 um die Achsen 11 und 12 geschwenkt werden. Die entsprechenden Gelenke sind in Figur 3 zur Vereinfachung weggelassen worden und werden in den Figuren 5 bis 7 genauer gezeigt.

Die Trennungslinie zwischen der schwenkbaren Hilfsschiene 3 und der Dachschiene 1 verläuft durch einen Unterbruch 59 des Uebergangsstücks 23. Die Schwenkbewegung um die Vertikalachse 11 wird durch ein Gelenk 60 in einer Scharnierplatte 61 ermöglicht, welche auf der Aussenseite des Uebergangsstücks 23 angeordnet ist. Die Verbindung im Punkt rsp. in der Achse 12 zwischen der Scharnierplatte 61 und dem Uebergangsstück 23 ist drehbar ausgeführt und ermöglicht die Drehung um die Horizontalachse 12. Figur 8 zeigt die Dach- und die Hilfsschiene nach einer solchen Drehung um die Horizontalachse 12.

Im folgenden werden Anhand der Figuren 9 bis 11 noch einige andere Ausführungen der Erfindung kurz besprochen.

Die Schlitten gemäss Figur 9 weisen im Gegensatz zu jenen gemäss Figur 3 nur vier Rollen auf, wobei die Aufgabe der Doppelrolle 34, 35 nun von einer einzigen Rolle 34' übernommen wird, welche von den Rollen 32 und 33 gleiche Abstände hat. Diese Lösung ist konstruktiv einfacher als jene gemäss Figur 3, bietet aber eine weniger sichere Führung des Schlittens im Uebergangsbereich. In der Schiene nach Figur 9 wurde ferner das Hilfsstück 24 weggelassen. Dieses Stück ist zur geometrischen Führung der Schlitten gemäss Figur 3 oder 9 nicht unbedingt notwendig, verbessert aber ebenfalls die Sicherheit der Führung im Uebergangsbereich.

Eine etwas andere Ausführung ergibt sich aus den Figuren 10 und 11. Der hier gezeigte Schlitten weist nur noch drei Rollen oder Gleiter 70, 71 und 72 auf. Diese sind an einem gebogenen Basisblech 73 montiert und greifen in drei U-Profile 74 - 76 ein. Die U-Profile sind an einem Steg 77 befestigt.

Das eine U-Profil 74 verläuft nur in der Dachschiene und endet in Punkt 78. Die U-Profile 75 und 76 beschreiben beide die gleiche Kurve, sind aber zueinander so versetzt, dass der Schlitten 5 bei seinem Weg entlang der Schiene immer die gleiche Orientierung hat und nicht gekippt wird. Im Dachbereich wird er von allen Rollen 70 - 72 geführt, im Bereich der Hilfsschiene 3 nur noch von den Rollen 71 und 72, währenddem die Rolle 70 frei liegt.

Ähnlich wie in der Konstruktion gemäss Figur 3 können die Hilfs- und die Dachschiene 3 rsp. 1 von Figur 10 gegeneinander verschwenkt werden, so dass die Hilfsschiene 3 in eine den Fahrbetrieb nicht störende Transportstellung bewegt werden kann. Alternativ kann jedoch auch in allen hier gezeigten Ausführungen die Hilfsschiene abnehmbar gestaltet werden, so dass sie nach Gebrauch von der Dachschiene entfernt und z. B. in den Kofferraum gelegt werden kann. Dies hat den Vorteil, dass die gleichen Hilfsschienen auf beiden Seiten des Fahrzeugs verwendet werden können.

Gegenüber der Lösung gemäss Figur 3 ist die Ausführung nach Figur 10 und 11 konstruktiv etwas einfacher. Sie hat aber den Nachteil, dass die U-Profile zum Beispiel durch Schnee leicht verstopfen können.

In den gezeigten Ausführungsbeispielen wird die horizontale Lage des Schlittens dadurch garantiert, dass die Rollen des Schlittens alle auf geometrisch identischen, aber parallel zueinander versetzten Bahnen laufen. In den geraden Bereichen der Schiene verlaufen die Bahnen parallel zueinander. In den gekrümmten Bereichen der Schiene ändert sich ihr gegenseitiger Abstand je nach Anordnung der Rollen. Wenn sich die Führungsbahnen wie z.B. in den Figuren 3 und 10 überkreuzen, sind in den Schienen entsprechende Kreuzungen vorzusehen.

Wie im Beispiel gemäss Figur 10 gezeigt wird, brauchen die Rollen nicht unbedingt entlang der ganzen Führungsbahn geführt zu werden. Je nach geometrischen Verhältnissen können die Rollen in gewissen Bereichen ungeführt bleiben, ohne dass die Schlittenstabilität darunter leidet. Prinzipiell genügt es, dass ständig mindestens zwei Rollen geführt sind. Zur Erhöhung der Stabilität und Führungsgenauigkeit empfiehlt es sich jedoch oftmals, mehr als zwei der Rollen zu führen.

## Patentansprüche

1. Dachträger zur Befestigung von Ladegut auf einem Fahrzeugdach mit mindestens einer Dachschiene (1), mindestens einer jeder Dachschiene (1) zugeordnete Hilfsschiene (3) und mindestens einem Schlitten (5) mit Aufnahmevorrichtung für das Ladegut, wobei die Dachschiene (1) im wesentlichen horizontal verläuft, und wobei die Hilfsschiene (3) in eine Beladestellung bringbar ist, in welcher sie von der Dachschiene (1) abwärts verläuft und zusammen mit der Dachschiene (1) eine durchgehende, im wesentlichen starre Gesamtschiene bildet, entlang der der Schlitten (5) verfahrbar ist, dadurch gekennzeichnet, dass der Schlitten (5) derart in der Gesamtschiene geführt ist, dass die Aufnahmevorrichtung des Schlittens beim Verfahren entlang der Gesamtschiene nicht verkippt wird.

2. Dachträger nach Anspruch 1, dadurch gekennzeichnet, dass der Schlitten (5) Führungsmittel (31 - 35) aufweist, wobei jedes Führungsmittel (31 - 35) beim Verfahren des Schlittens entlang der Gesamtschiene einem Führungsweg folgt und mindestens auf einem Teil des Führungswegs geführt ist, und wobei alle Führungswege identischen, parallel zueinander versetzten geometrischen Kurven folgen, derart, dass der Schlitten immer die gleiche Lage hat.

3. Dachträger nach Anspruch 2, dadurch gekennzeichnet, dass der Schlitten mindestens drei Führungsmittel (31 - 35) aufweist, wobei die Führungswege eines ersten und eines zweiten Führungsmittels (31, 32) mindestens über einen Teil der Länge der Dachschiene (1) gemeinsam verlaufen und vom Führungsweg eines dritten Führungsmittels (33) beabstandet sind, und dass mindestens über einen Teil der Länge der Hilfsschiene (3) die Führungswege des ersten und des dritten Führungsmittels (31, 33) gemeinsam verlaufen und vom Führungsweg des zweiten Führungsmittels (32) beabstandet sind.

4. Dachträger nach Anspruch 3, dadurch gekennzeichnet, dass der Führungsweg eines vierten Führungsmittels (34, 35) mindestens über einen Teil der Länge der Dachschiene (1) gemeinsam mit dem Führungsweg des dritten Führungsmittels (33) verläuft und mindestens über einen Teil der Länge der Hilfsschiene (3) gemeinsam mit dem Führungsweg des zweiten Führungsmittels (32) verläuft.

5. Dachträger nach Anspruch 4, dadurch gekennzeichnet, dass mindestens über einen Teil ihrer Längen die Dachschiene (1) und die Hilfsschiene (3) gerade und von konstanter Dicke sind, dass im geraden Teil der Dachschiene (1) das erste und das zweite Führungsmittel (31, 32) entlang einer Oberseite (40), und das dritte und das vierte Führungsmittel (33; 34, 35) entlang einer Unterseite (41) der Dachschiene (1) verlaufen, und dass im geraden Teil der Hilfsschiene (3) das erste und das dritte Führungsmittel (31, 33) entlang einer Oberseite (50), und das zweite und das vierte Führungsmittel (32; 34, 35) entlang einer Unterseite (51) der Hilfsschiene (3) verlaufen.

6. Dachträger nach Anspruch 5, dadurch gekennzeichnet, dass die Führungsmittel (31 - 35) an einem Basiskörper (36) des Schlittens (5) angeordnet sind, der sich auf einer Schlittenseite der Gesamtschiene befindet, dass das erste und das vierte Führungsmittel (31; 34, 35) den Basiskörper (36) weiter überragen als das zweite und das dritte Führungsmittel (32, 33), und dass die Gesamtschiene im Bereich einer Krümmung (20) schlittenseitig zurückversetzt ist, derart, dass im Bereich der Krümmung (20) die Führungswege des zweiten und des dritten Führungsmittels (32, 33) getrennt von den Führungswegen des ersten und des vierten Führungsmittels (31; 34, 35) sind.

7. Dachträger nach einem der Ansprüche 5 oder 6, dadurch gekennzeichnet, dass die ersten, zweiten und dritten Führungsmittel (31 - 33) je eine Rolle, und das vierte Führungsmittel (34, 35) mindestens zwei Rollen umfassen.

8. Dachträger nach einem der vorangehenden Ansprüche, dadurch gekennzeichnet, dass die Hilfsschiene (3) schwenkbar mit der Dachschiene (1) verbunden ist und von der Beladestellung in eine im wesentlichen senkrecht zur Dachschiene (1) stehende Transportstellung schwenkbar ist.

9. Dachträger nach einem der vorangehenden Ansprüche, dadurch gekennzeichnet, dass zwei Dachschienen (1) und zwei Hilfsschienen (3) vorgesehen sind, mit denen parallel verlaufende Gesamtschienen formbar sind, und dass jeder Schlitten (5) der einen Gesamtschiene mit je einem Schlitten der anderen Gesamtschiene zu einem Lastfahrzeug (4) verbunden ist.

10. Dachträger nach Anspruch 9, dadurch gekennzeichnet, dass zwischen den beiden Gesamtschienen ein Verschlussmechanismus (7 - 9) angeordnet ist, welcher eine Achse (8) und mindestens ein quer zur Achse stehendes Arretierorgan (9) aufweist, wobei der Verschlussmechanismus (7 - 9) durch Drehung der Achse (8) von einer Offenstellung in eine Verschlussstellung bringbar ist, wobei in der Verschlussstellung mit dem Arretierorgan (9) ein sich im Bereich der Dachschienen befindliches Lastfahrzeug (4) arretierbar ist.

11. Dachträger nach den Ansprüchen 8 und 10, dadurch gekennzeichnet, dass der Verschlussmechanismus (7 - 9) einen Hilfsschienenhalter (7) aufweist, in welchem die Hilfsschienen (3) in der Transportstellung befestigbar sind, sofern sich der Verschlussmechanismus (7 - 9) in der Verschlussstellung befindet.
